(19) Europäisches Patentamt
European Patent Office
Office européen des brevets

(11) EP 2 255 466 B1

(12) FASCICULE DE BREVET EUROPEEN

(45) Date de publication et mention
de la délivrance du brevet:
**10.05.2017 Bulletin 2017/19**

(51) Int Cl.:
***H04B 15/06*** *(2006.01)*   ***H04B 1/16*** *(2006.01)*
***H04B 7/12*** *(2006.01)*

(21) Numéro de dépôt: **09727266.0**

(22) Date de dépôt: **17.03.2009**

(86) Numéro de dépôt international:
**PCT/FR2009/050436**

(87) Numéro de publication internationale:
**WO 2009/122084 (08.10.2009 Gazette 2009/41)**

(54) **RÉCEPTEUR RADIOFRÉQUENCE LARGE BANDE MULTICANAUX.**

BREITBAND-MEHRKANALFUNKFREQUENZEMPFÄNGER

BROADBAND MULTI-CHANNEL RADIOFREQUENCY RECEIVER

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **18.03.2008 FR 0851748**

(43) Date de publication de la demande:
**01.12.2010 Bulletin 2010/48**

(73) Titulaire: **Airbus DS SAS**
**78990 Elancourt (FR)**

(72) Inventeurs:
• **CLEMENT, Benoît**
**F-75015 Paris (FR)**
• **LATOUCHE, Gilles**
**F-78330 Fontenay Le Fleury (FR)**
• **MULLER, Olivier**
**F-78600 Maisons-Laffitte (FR)**

(74) Mandataire: **Cabinet Camus Lebkiri**
**25 rue de Maubeuge**
**75009 Paris (FR)**

(56) Documents cités:
**US-A1- 2005 265 483**

## Description

La présente invention concerne un dispositif de réception d'un signal radiofréquence large bande multicanaux comportant un étage d'entrée analogique en radiofréquence connecté à un étage de conversion en fréquence intermédiaire. Elle concerne également une station de base comportant un tel dispositif ainsi qu'un procédé de calibration de ce dispositif.

Les systèmes de radiocommunication actuels sont de plus en plus souvent définis sous la forme d'une bande de fréquence allouée dans laquelle sont définis des canaux de communication. Pour une installation donnée, le choix des canaux utilisés se fait en fonction des canaux alloués à l'opérateur de l'installation et des canaux utilisés dans l'environnement de l'installation de façon à éviter des phénomènes de superposition pouvant entraîner le brouillage des communications (systèmes dits cellulaires).

Par exemple, les systèmes PMR (Private Mobile Radiocommunications - réseaux de télécommunication radio mobile privés) TETRA normalisés par l'ETSI (European Télécommunications Standards Institute - institut européen des normes de télécommunication) utilisent une bande de 5MHz, dite bande du système dans la suite de ce document, aux environs de 400 MHz, et, à l'intérieur de cette bande, la largeur de chaque canal est de 25kHz. Dans un tel réseau, lors de l'installation d'une station de base, 4 canaux seront typiquement choisis en fonction des critères cités précédemment pour couvrir les communications dans la cellule centrée sur la station de base et dont le rayon correspond approximativement à la portée du système.

Une station de base comprend ainsi typiquement 4 récepteurs radio, chacun étant dédié à un canal donné.

Chaque récepteur radio d'une telle station de base comporte typiquement un étage d'entrée analogique en radiofréquence connecté à un étage de conversion en bande intermédiaire dont la sortie est numérisée par un convertisseur analogique numérique. Le signal numérisé est alors traité par des calculateurs de type processeur de traitement de signal afin d'extraire l'information utile.

L'étage d'entrée analogique comporte typiquement une antenne de réception permettant de recueillir le signal radiofréquence. Puis ce signal est filtré dans un filtre passe-bande dit de présélection dont la bande passante correspond à la bande de fréquence du système. Le signal filtré est alors amplifié par un amplificateur faible bruit avant d'entrer dans l'étage de conversion.

Dans un mélangeur connecté à un oscillateur local, le signal du canal sélectionné est transposé en un signal à la fréquence intermédiaire, typiquement de l'ordre de plusieurs dizaines de mégahertz.

Traditionnellement, le signal transposé est alors filtré par un filtre passe-bande ayant une bande passante égale à la largeur du canal et étant centré sur la fréquence intermédiaire. En sortie du filtre, un convertisseur analogique numérique, ou CAN, numérise le signal correspondant au canal sélectionné avant traitement numérique, configuration classique d'une architecture numérique monocanal.

Il existe maintenant sur le marché des CAN ayant des fréquences d'échantillonnage d'environ 100MHz et capable de numériser sur 13 bits effectifs (ENOB - Effective Number Of Bits). Un seul CAN permet alors de numériser l'ensemble de la bande de fréquence du système. Ainsi, on remplace les 4 chaînes radio qui travaillaient en parallèle sur les 4 canaux de manière indépendante par une seule chaîne. L'étage de transposition est suivi par un filtre passe-bande dont la bande passante correspond désormais à la bande de fréquence du système. Ce filtre est utilisé afin d'éliminer les produits du mélange parasites générés par la transposition. Le signal transposé et filtré est alors numérisé par un CAN unique à haute fréquence. La séparation des canaux est effectuée ensuite par le traitement numérique aval.

Ce mode de réalisation a l'avantage de réduire le nombre de chaînes analogiques et de CAN par un facteur égal au nombre de canaux à numériser.

La contrepartie est la complexification de la partie numérique qui devra notamment séparer les canaux avant de démoduler chacun d'entre eux.

Par ailleurs, le CAN génère des signaux parasites qui peuvent être impossibles à éliminer dans les étapes numériques en aval. Le SFDR (Spurious Free Dynamic Range - Bande dynamique libre de parasites) est le paramètre qui dimensionne la performance du CAN vis à vis de ce défaut.

Classiquement, deux types de non-linéarité sont à l'origine des signaux parasites du CAN :

- Les non-linéarités de la fonction de transfert du convertisseur (irrégularité des marches) caractérisées par l'INL (Integral NonLinearity - non-linéarité intégrale) et la DNL (Differential NonLinearity - non-linéarité différentielle) et

- Les non-linéarités des parties analogiques du CAN. Ces non-linéarités génèrent des harmoniques relatives aux signaux présents en entrée du CAN qui se replient et peuvent bruiter le signal utile. Ainsi, dans la bande de fréquence du système il peut se trouver des situations dans lesquelles un signal utile ayant une énergie relativement faible côtoie l'harmonique d'un autre signal (utile ou brouilleur) avec une énergie relativement forte. La non-linéarité du CAN peut transformer cette proximité en un bruit recouvrant le signal utile, bruit généré par des fréquences parasites issues du signal de brouillage. Ce phénomène peut être caractérisé à l'aide d'une analyse spectrale en sortie du CAN, celui-ci étant alimenté par le signal de brouillage. L'analyse montre alors un pic au niveau de la fréquence principale du signal de brouillage ainsi qu'un certain nombre de pics parasites dont la puissance est potentiellement supérieure à la valeur minimale d'un signal utile tel que défini dans une norme. Si la fréquence d'un de ces pics parasites correspond à la fréquence du signal utile, celui-ci sera brouillé avec, peut être, un ratio signal/bruit trop faible pour permettre une récupération de l'information transportée.

Pour diminuer les réponses parasites dues à la fonction de transfert du CAN on utilise couramment du bruit de dither : l'ajout d'un bruit décorrélé du signal utile permet de toujours utiliser plusieurs 'marches' du CAN ce qui minimise les réponses liées aux non-linéarités d'une certaine partie de la fonction de transfert du CAN. En revanche, il n'existe pas actuellement de technique efficace permettant de diminuer le niveau des réponses dues aux non-linéarités des parties analogiques.

Les signaux pouvant générer ces non-linéarité sont l'ensemble des signaux reçus par la station de base, c'est à dire les signaux utiles reçus, ceux émis en direction des stations de base voisines et les émissions d'autres systèmes radiofréquence qui ne sont pas éliminés par les différents filtres de la chaîne de réception.

En effet, comme expliqué précédemment, les canaux de la station de base sont choisis différents des canaux utilisés par les stations de base environnantes afin d'éviter un brouillage. Cependant, lors de la numérisation, ces fréquences peuvent générer des repliements d'harmoniques dont les fréquences sont dans les canaux utiles et donc générer un bruit nuisible à la qualité de la transmission. Le document US 2005/265483 décrit un dispositif de réception d'un signal radiofréquence large bande multicanaux comportant un étage d'entrée analogique en radiofréquence connecté à un étage de conversion en fréquence intermédiaire, ledit étage de conversion comportant une chaîne de conversion comportant un mélangeur de fréquence transposant le signal à une fréquence intermédiaire en étant connecté à l'entrée d'un convertisseur analogique-numérique ayant une haute fréquence d'échantillonnage, la fréquence intermédiaire et la fréquence d'échantillonnage en considérant le bruit généré par les harmoniques d'échantillonnage du convertisseur analogique-numérique.

Il serait donc particulièrement avantageux d'obtenir un dispositif de réception qui permette d'obtenir un bon ratio signal/bruit au niveau des canaux utiles en minimisant ou supprimant les harmoniques qui parasitent ces canaux.

Pour résoudre un ou plusieurs des inconvénients cités précédemment, un dispositif de réception d'un signal radiofréquence large bande multicanaux comporte un étage d'entrée analogique en radiofréquence connecté à un étage de conversion en fréquence intermédiaire, le dit étage de conversion comportant au moins une chaîne de conversion comportant un mélangeur de fréquence transposant le signal à une fréquence intermédiaire connecté à l'entrée d'un convertisseur analogique-numérique ayant une haute fréquence d'échantillonnage, caractérisé en ce que la fréquence intermédiaire et la fréquence d'échantillonnage de chaque chaîne de conversion sont sélectionnées de telle sorte que, en considérant le bruit généré par les harmoniques d'échantillonnage du convertisseur analogique-numérique correspondant, chacun des canaux du signal radiofréquence ait un ratio signal/bruit supérieur à une valeur prédéterminée en sortie d'au moins une chaîne de conversion.

Des caractéristiques ou des modes de réalisation particuliers, utilisables seuls ou en combinaison, sont :

- l'étage de conversion comporte au moins deux chaînes de conversion, chaque chaîne de conversion ayant un couple fréquence intermédiaire-fréquence d'échantillonnage différent des autres chaînes de conversion.
- les fréquences d'échantillonnage des convertisseurs analogiques-numériques sont identiques et les fréquences intermédiaires différentes pour toutes les chaînes de conversion.
- l'espacement des fréquences intermédiaires est un multiple d'une fréquence prédéterminée.
- la fréquence prédéterminée est égale à l'espacement entre canaux.
- l'étage d'entrée comporte plusieurs chaînes de réception comportant chacune une antenne et travaillant en diversité d'antenne de telle sorte qu'à chaque chaîne de réception est connectée en série au moins une chaîne de conversion.
- à chaque chaîne de réception est connectée en série une et une seule chaîne de conversion.

Dans un second aspect de l'invention, une station de base d'un réseau de télécommunication hertzien est caractérisée en ce qu'elle comporte un dispositif de réception tel que ci-dessus.

Dans un mode de réalisation particulier, la sélection des fréquences d'échantillonnage et de transposition est réalisée pour augmenter le ratio signal/bruit compte tenu des signaux d'harmoniques provenant des fréquences des canaux internes à la station de base ou utilisés par des stations de base adjacentes.

Dans un troisième aspect de l'invention un procédé de calibration d'un dispositif de réception tel que ci-dessus comporte les étapes de :

a) caractérisation spectrale de chaque convertisseur analogique-numérique adaptée pour déterminer les harmoniques principales générées par des signaux ayant une fréquence dans la bande intermédiaire considérée,

b) détermination des positions relatives dans la bande du système des signaux utiles et des signaux brouilleurs,

c) sélection pour une première chaîne de conversion d'un couple fréquence intermédiaire-fréquence d'échantillonnage tel qu'au moins un signal utile a un ratio signal/bruit supérieur à la valeur prédéterminée en sortie de la chaîne de conversion,

d) si au moins un signal utile a un ratio signal/bruit inférieur à la valeur prédéterminée, réexécution de l'étape c) avec une autre chaîne de conversion et un autre couple fréquence intermédiaire-fréquence d'échantillonnage de sorte que ce signal utile ait un ratio signal/bruit supérieur à la valeur prédéterminée en sortie de cette chaîne.

Dans un mode de réalisation particulier, ce procédé de calibration est tel que les étapes c) et d) sont réitérées pour optimiser au moins un des critères suivants :

◦ minimiser le nombre de signaux utiles ayant un ratio signal/bruit supérieur à une valeur prédéterminée sur seulement une des chaînes de conversion ;
◦ minimiser le nombre de chaîne de conversion nécessaire pour traiter l'ensemble des signaux utiles ; et/ou
◦ maximiser le nombre de signaux utiles ayant un ratio signal/bruit supérieur à une valeur prédéterminée sur l'ensemble des chaînes de conversion.

L'invention sera mieux comprise à la lecture de la description qui suit, faite uniquement à titre d'exemple, et en référence aux figures en annexe dans lesquelles :

- la figure 1 est une vue schématique d'un dispositif de réception selon un premier mode de réalisation de l'invention ;
- la figure 2 est un ordinogramme du fonctionnement d'une chaîne de conversion du dispositif de la figure 1 ;
- la figure 3A est une vue représentant schématiquement un spectre de fréquence illustratif en amont d'un dispositif de réception tel que celui de la figure 1 ;
- la figure 3B et 3C sont des vues représentant schématiquement le spectre de fréquence en sortie des chaînes de conversion du dispositif de la figure 1 lorsqu'il reçoit le spectre de fréquences illustré à la figure 3A ;
- la figure 4 est une vue schématique d'un dispositif de réception selon un second mode de réalisation de l'invention ; et
- la figure 5 est en ordinogramme d'un procédé de calibration des dispositifs des figures 1 ou 4.

Dans les figures représentant différents modes de réalisation, les éléments identiques ou similaires portent, dans la mesure du possible, la même référence.

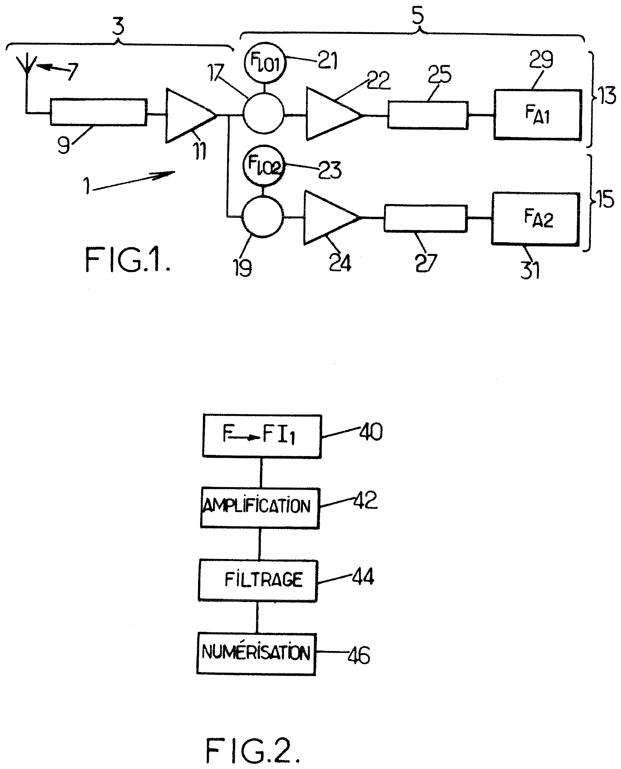

En référence à la figure 1, un dispositif 1 de réception comporte un étage d'entrée 3 analogique en radiofréquence connecté à un étage de conversion 5 en fréquence intermédiaire.

L'étage d'entrée 3 analogique comporte classiquement une antenne 7 de réception permettant de recueillir le signal radiofréquence. Puis ce signal est filtré dans un filtre passe-bande 9 dit de présélection dont la bande passante correspondant à la bande de fréquence du système. Le signal filtré est alors amplifié par un amplificateur 11 faible bruit avant d'entrer dans l'étage de conversion. Cet étage d'entrée utilise des technologies bien connues de l'homme du métier et ne sera donc pas décrit plus en détail.

L'étage de conversion en fréquence intermédiaire 5 comporte deux chaînes de conversion 13, 15 connectées en parallèle sur la sortie de l'étage d'entrée 3.

Chaque chaîne 13, 15 comporte un mélangeur 17, 19 relié à un oscillateur local 21, 23. Les oscillateurs locaux 21, 23 oscillent à des fréquences $F_{lo1}$ et $F_{lo2}$. Les fréquences $F_{lo1}$ et $F_{lo2}$ sont légèrement différentes de façon à ce que le signal soit transposé à des fréquences intermédiaires $FI_1 = FI + \Delta f_1$ et $FI_2 = FI + \Delta f_2$, $\Delta f_1$ et $\Delta f_2$ étant différents.

Sur chaque chaîne 13, 15, en sortie du mélangeur 17, 19 sont disposés en série un amplificateur de fréquence intermédiaire 22, 24, un filtre passe-bande intermédiaire 25, 27 puis un convertisseur analogique-numérique 29, 31 à haute fréquence dont la sortie est connectée à un calculateur de traitement de signal classique (non représenté).

Les filtres intermédiaires 25, 27 sont des filtres passe-bande centrés autour de la fréquence intermédiaire FI avec une bande passante égale ou très légèrement supérieure à la largeur de bande du système, soit, dans notre exemple, environ 5MHz.

Chaque CAN 29, 31 est du type décrit précédemment, c'est-à-dire avec une fréquence d'échantillonnage $Fa_1$, respectivement $Fa_2$, par exemple d'environ 100MHz. L'homme du métier sait déterminer les fréquences d'échantillonnage et les fréquences intermédiaires qui permettent de respecter le théorème de Shannon, compte tenu de la bande utile du système. Ainsi, par exemple, pour une fréquence d'échantillonnage de 100MHz, une fréquence intermédiaire de 70 MHz et une bande utile du système de 5 MHz, les conditions sont respectées : le signal utile numérisé sera centré autour de la fréquence -30 MHz (bande [-32,5 ;-27,5] MHz) et n'interférera pas avec son image localisée autour de 30 MHz (bande [27,5 ;32,5] MHz).

Le fonctionnement d'une chaîne de conversion, par exemple la chaîne 13, est le suivant, figure 2.

Le mélangeur 17 transpose classiquement, étape 40, le signal radio d'entrée en un signal en fréquence intermédiaire $FI_1$. Typiquement, alors que la fréquence radio de base est de l'ordre de 400 MHz, la fréquence $FI_1$ est d'environ 70MHz. Ainsi, dans notre exemple d'un signal ayant une bande de 5MHz, chaque canal se trouvera à une fréquence $FI_{canal}$ comprise entre $FI_1$ - 2,5MHz et $FI_1$ + 2,5MHz, la largeur du canal étant très faible par rapport à la largeur de bande.

L'amplificateur FI 22, étape 42, permet de redonner du gain et de masquer la désadaptation hors bande présentée par le filtre intermédiaire 25, afin que le mélangeur travaille dans des conditions optimales. L'homme de métier sait d'ailleurs ajouter les éléments d'amplification et d'atténuation nécessaires à la bonne répartition des gains, où bon lui semble dans la chaîne.

Le filtre intermédiaire 25 élimine, étape 44, du signal en sortie de l'amplificateur 22 les harmoniques générées par les étapes précédentes et, en particulier, celle de transposition, qui se trouvent en dehors de la bande du système et qui ne peuvent que générer du bruit lors de l'échantillonnage.

Lors de la numérisation d'un signal à la fréquence FI, étape 46, le CAN 29 génère des harmoniques $H_k$ pour les raisons expliquées précédemment. La fréquence de chaque harmonique associée à un des signaux présents dans la bande passante du récepteur est un multiple de la fréquence dudit signal modulo la fréquence d'échantillonnage du CAN soit

$$H_k = k * (FI + \Delta f_{canal}) \text{ modulo } Fa_1.$$

Ainsi, pour chaque signal reçu, qu'il soit utile ou parasite, la fréquence de ces harmoniques dépend de la fréquence intermédiaire du signal et de la fréquence d'échantillonnage.

Comme il est bien connu, la puissance des harmoniques décroît rapidement avec l'ordre de celles-ci et donc, en pratique, seules les premières harmoniques, doivent être éliminées du traitement car elles peuvent générer un bruit trop important.

Il est à noter, que pour un CAN particulier, il est possible de procéder à une caractérisation par analyse spectrale de façon à détecter les harmoniques suffisamment puissantes pour nuire au ratio signal/bruit.

Connaissant les fréquences intermédiaires des canaux utiles, et la population des harmoniques, on sélectionne alors un couple (fréquence intermédiaire FI, fréquence d'échantillonnage Fa) de façon à ce que les fréquences $H_k$ des harmoniques nuisibles se trouvent en dehors des fréquences des canaux utiles. En particulier, la sélection sera faite pour minimiser l'impact des harmoniques générées par des fréquences de brouillage connues comme les fréquences de réception de la station de base ou les fréquences de réception des stations de base adjacentes.

Ainsi, le ratio signal/bruit de chaque canal utile est maintenu supérieur à une valeur prédéterminée liée par exemple à la norme ou aux capacités de traitement de signal. Il est à noter que le décalage ne joue pas de façon égale pour toutes les fréquences à cause, en particulier, de la non-linéarité du CAN et des phénomènes de repliement. C'est ce décalage variable qui permet d'écarter les signaux parasites des signaux utiles par un choix judicieux des fréquences intermédiaires et d'échantillonnage.

Cependant, dans certaines circonstances, comme par exemple un environnement très bruité, il est possible qu'aucun couple FI-Fa ne permette d'obtenir un bon ratio signal/bruit pour tous les canaux utiles.

L'utilisation d'une seconde chaîne de conversion 15 permet alors, par la sélection d'un autre couple de valeurs $(FI_2 ; Fa_2)$ d'obtenir un bon ratio signal/bruit pour les canaux qui sont bruités dans la première chaîne de conversion 13.

On comprend qu'il est ainsi possible de mettre en parallèle autant de chaînes de conversion que nécessaire pour que tous les signaux utiles soient obtenus avec un ratio signal/bruit supérieur à la valeur prédéterminée.

Il est ainsi avantageusement possible d'adapter la complexité du dispositif de réception, et donc son coût à l'environnement de travail de la station de base. Dans un environnement peu bruité et avec une faible utilisation de canaux, l'étage de transposition ne comportera qu'une seule chaîne de conversion alors que dans un environnement bruité et avec l'utilisation de nombreux canaux, plusieurs chaînes de conversion seront utilisées.

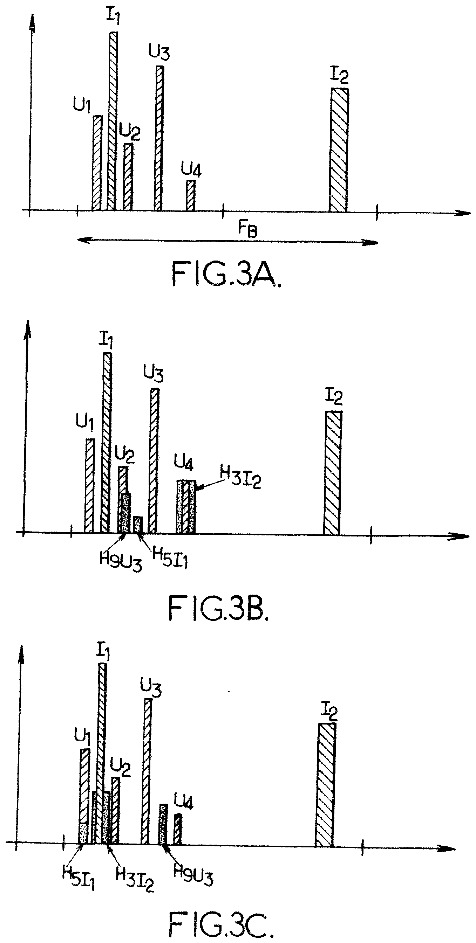

Pour illustrer le fonctionnement du dispositif de réception, on suppose que, sur la bande du système $F_B$, coexistent quatre canaux utiles $U_1$, $U_2$, $U_3$, $U_4$, Fig. 3A. L'environnement du dispositif est tel qu'il y a également deux fréquences de brouillage $I_1$ et $I_2$. Par exemple, $I_1$ correspond à la fréquence d'une station adjacente et $I_2$ est un signal émis en direction d'une station de base appartenant à un autre système de transmission coexistant dans la même zone.

Après transposition et conversion numérique en utilisant un premier couple de fréquence-intermédiaire /fréquence d'échantillonnage, le spectre en sortie de convertisseur apparaît comme illustré Fig.3B.

On constate que l'harmonie $H_{9U3}$ correspondant à la 9ième harmonique du signal utile $U_3$ se replie en partie sur le signal $U_2$. Ce dernier n'est alors pas démodulable par la chaîne numérique de la station de base car le ratio signal/bruit minimal n'est pas satisfait. De même $H_{3I2}$ correspondant à la troisième harmonique du signal $I_2$ masque totalement le signal $U_4$ qu'il n'est pas possible de démoduler. Par contre, la cinquième harmonique $H_{5I1}$ du signal $I_1$ ne pose pas de problème car elle est suffisamment éloignée des signaux utiles $U_2$ et $U_3$.

En modifiant le couple fréquence intermédiaire/fréquence d'échantillonnage, Fig. 3C, le spectre de fréquence se modifie. La cinquième harmonique $H_{5I1}$ se replie en partie sur le signal utile $U_1$. Ce dernier n'est alors plus démodulable car le ratio signal /bruit minimal n'est pas atteint.

La cinquième harmonique $H_{3I2}$ se replie sur le brouilleur $I_1$ mais cela ne pose pas de problème puisque $I_1$ n'est pas un signal utile.

De même la neuvième harmonique $H_{9U3}$ du signal $U_3$ ne pose pas de problème car elle est écartée des fréquences $U_3$ et $U_4$.

Ainsi, en supposant que la Fig. 3B représente la sortie de la première chaîne de conversion et que la Fig. 3C représente la sortie de la seconde chaîne de conversion, on constate qu'il est possible de démoduler $U_1$ sur la première chaîne de conversion, $U_2$ et $U_4$ sur la seconde chaîne de conversion et $U_3$ sur l'une ou l'autre ou, plus avantageusement en combinant le résultat des deux voies.

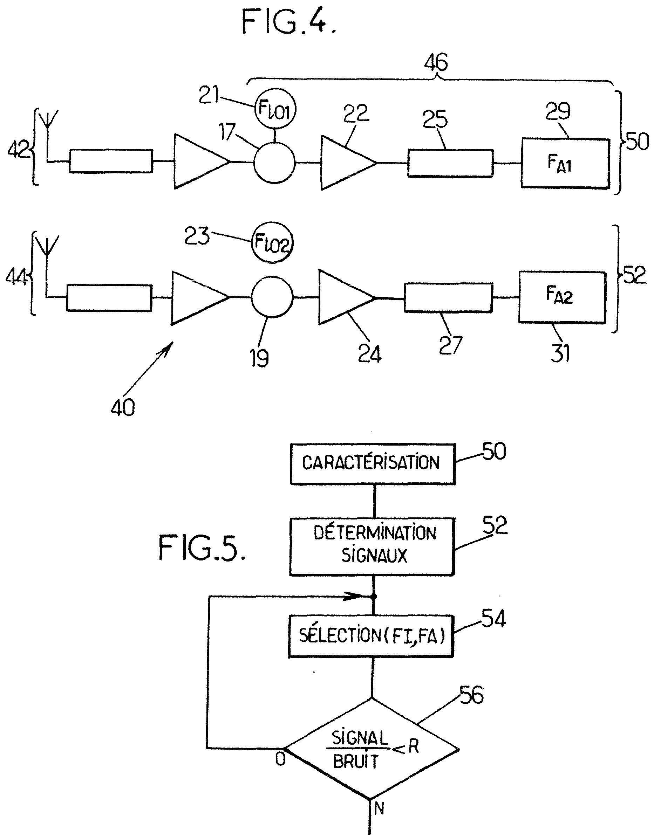

Dans un second mode de réalisation, figure 4, la station de base fonctionne en diversité d'antennes. Le dispositif de réception 40 comporte au niveau de l'étage d'entrée deux chaînes de réception 42, 44 analogiques similaires à l'étage d'entrée 3 du premier mode de réalisation et un étage de conversion 46 comportant deux chaînes de conversion 50, 52 identiques aux chaînes de conversion 13, 15 du premier mode de réalisation, chacune étant connectée en sortie d'une des chaînes de réception 42, 44. Ainsi, contrairement au premier mode de réalisation où deux chaînes de conversion sont connectées en parallèle à la sortie d'un étage d'entrée, le second mode de réalisation comporte deux ensembles distincts composés chacun d'une antenne, d'une chaîne de réception et d'une chaîne de conversion.

Le choix du couple (FI,Fa) de chaque chaîne de conversion est réalisé comme dans le premier mode de réalisation.

Ce mode de réalisation profite des avantages bien connus liés à la diversité d'antenne tels que la robustesse aux chemins multiples, etc.

Ainsi, dans ce mode de réalisation, l'exemple illustré aux FIG. 3A, 3B et 3C montre que le signal $U_3$ peut avantageusement tirer profit du gain de la diversité d'antenne.

Il est à noter que, dans ce mode de réalisation, il y a autant de dispositifs de réception que d'antennes et qu'il n'est pas limité à deux, ce qui peut permettre de conserver la diversité d'antenne sur un maximum de canaux utiles.

Ce mode de réalisation permet une utilisation optimale des composants du dispositif de réception en combinant les avantages de la diversité d'antenne avec ceux décrits ci-dessus de diversification du couple fréquence intermédiaire-fréquence d'échantillonnage.

Lors de l'installation d'une station de base comportant un tel dispositif de réception, il est donc nécessaire de calibrer le dispositif en sélectionnant les couples fréquence intermédiaire/fréquence d'échantillonnage appropriés à l'environnement de la station de base, Fig. 5.

Pour cela, le spectre de sortie de chaque convertisseur analogique-numérique est caractérisé, étape 50, pour déterminer les harmoniques principales générées par des signaux ayant une fréquence dans la bande intermédiaire considérée.

Puis, les positions relatives des signaux utiles et des signaux brouilleurs sont déterminées, étape 52, pour cette station de base.

Pour une première chaîne de conversion, le couple fréquence d'échantillonnage-fréquence intermédiaire est sélectionné, étape 54, de façon à ce qu'au moins un signal utile ait un ratio signal/bruit supérieur à la valeur prédéterminée en sortie de la chaîne de conversion.

On examine alors, étape 56, s'il reste au moins un signal utile ayant un ratio signal/bruit inférieur à la valeur prédéterminée. Si c'est le cas, l'étape 54 est réexécutée avec une autre chaîne de conversion et ceci, jusqu'à ce que tous les signaux aient un ratio signal/bruit supérieur à la valeur prédéterminée en sortie d'au moins une chaine de conversion.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles, le cas général étant avec N chaînes radio, chacune suivie d'un certain nombre de chaînes de conversion en fréquence intermédiaire.

Il est particulièrement avantageux d'utiliser pour toutes les chaînes de conversion un même modèle de CAN et d'avoir une fréquence d'échantillonnage unique pour toutes les chaînes de conversion. Ainsi, le traitement numérique en aval est fortement simplifié car il ne se base alors que sur une seule fréquence d'horloge. Dans le cas contraire, il devient nécessaire de prévoir des moyens de synchronisation et de normalisation de fréquence d'échantillonnage pour pouvoir, lors des traitements numériques, combiner les flux provenant des différentes chaînes de conversion ou, ce qui est équivalent en terme de complexité, prévoir des chaînes de traitement numériques spécifiques à chaque chaîne de conversion, chaque chaîne numérique ayant sa propre fréquence.

Les différences entre les chaînes de conversion portent alors sur les variations $\Delta f$ de la fréquence intermédiaire. Celles-ci sont sélectionnées de préférence dans une plage de fréquence telle que le filtre intermédiaire est du même type pour toutes les chaînes de conversion ($\Delta f$ très petit devant la bande passante du filtre). Ainsi seuls les oscillateurs locaux doivent être différenciés pour générer des fréquences différentes. Ce qui permet avantageusement de standardiser les composants utilisés par les chaînes de conversion sur une seule gamme.

Les variations $\Delta f$ sont avantageusement choisies pour être des multiples d'une fréquence prédéterminée et préférentiellement, des multiples de l'espacement entre canaux. Ainsi, le traitement numérique est facilement transposable entre les différentes chaînes de conversion par une simple modification du numéro de canal à démoduler. En particulier, lorsque la variation $\Delta f$ est telle que la fréquence d'un signal utile $Fsig_1$ dans une première chaîne de conversion est égale à la fréquence d'un second signal utile $Fsig_2$ dans une seconde chaîne de conversion, le traitement numérique du premier signal utile sera avantageusement identique au traitement numérique du second signal utile.

Il est également possible de modifier dynamiquement les valeurs de la fréquence intermédiaire en utilisant un oscillateur local programmable. Ceci permet avantageusement d'adapter le dispositif de réception à la présence de nouveaux signaux brouilleurs.

Le procédé de calibration décrit en relation avec la Fig. 5 est adaptable, en réitérant les étapes 54 et 56, de façon à optimiser au moins un des critères suivants :

a) minimisation du nombre de signaux utiles ayant un ratio signal/bruit supérieur à une valeur prédéterminée sur seulement une des chaines de conversion ;

b) minimisation du nombre de chaînes de conversion nécessaire pour traiter l'ensemble des signaux utiles ; et/ou

c) maximisation du nombre de signaux utiles ayant un ratio signal/bruit supérieur à une valeur prédéterminée sur l'ensemble des chaînes de conversion.

Le critère b) est utilisé avantageusement dans un but d'économie en réduisant le nombre de chaînes de conversion nécessaire alors que les critères a) et c) sont particulièrement intéressants dans une station de base en diversité d'antenne puisqu'ils permettent d'avoir un maximum de canaux dans lesquels au moins deux signaux sont disponibles pour effectuer des calculs en diversité d'antenne.

L'homme de l'art n'aura aucune difficulté à étendre le principe de cette invention au cas des récepteurs à architecture IQ comportant deux convertisseurs analogiques-numériques en quadrature, ces derniers étant potentiellement sur une fréquence intermédiaire nulle ou proche de zéro.

Dans les revendications, le mot « comprenant » n'exclut pas d'autres éléments et l'article indéfini « un/une » n'exclut pas une pluralité.

**Revendications**

1. Dispositif de réception d'un signal radiofréquence large bande multicanaux comportant un étage d'entrée (3) analogique en radiofréquence, un étage de conversion (5) en fréquence intermédiaire connecté à l'étage d'entrée analogique et comportant au moins deux chaînes de conversion (13, 15), chaque chaîne de conversion ayant un couple fréquence intermédiaire/fréquence d'échantillonnage différent des autres chaînes de conversion et comportant un convertisseur analogique-numérique (29, 31) avec une haute fréquence d'échantillonnage ainsi qu'un mélangeur (17, 19) de fréquence transposant le signal à une fréquence intermédiaire en étant connecté à l'entrée du convertisseur analogique-numérique (29, 31)correspondant, le dispositif comprenant en outre des moyens de calibration adaptés pour sélectionner une ou plusieurs chaînes de conversion mises en parallèle, le cas échéant, en considérant la fréquence intermédiaire et la fréquence d'échantillonnage de chaque chaîne de conversion et le bruit généré par les harmoniques d'échantillonnage du convertisseur analogique-numérique correspondant, de telle sorte que chacun des canaux du signal radiofréquence ait un ratio signal/bruit supérieur à une valeur prédéterminée en sortie d'au moins une des chaînes de conversion sélectionnées.

2. Dispositif selon la revendication 1, **caractérisé en ce que** les fréquences d'échantillonnage des convertisseurs analogiques-numériques sont identiques et les fréquences intermédiaires sont différentes pour toutes les chaînes de conversion de l'étage de conversion.

3. Dispositif selon la revendication 2, **caractérisé en ce que** l'espacement des fréquences intermédiaires est un multiple d'une fréquence prédéterminée.

4. Dispositif selon la revendication 3, **caractérisé en ce que** la fréquence prédéterminée est égale à l'espacement entre canaux.

5. Dispositif selon l'une quelconque des revendications précédentes, **caractérisé en ce que** l'étage d'entrée comporte plusieurs chaînes de réception comportant chacune une antenne et travaillant en diversité d'antenne de telle sorte qu'à chaque chaîne de réception est connectée en série au moins une chaîne de conversion.

6. Dispositif selon la revendication 5, **caractérisé en ce qu'**à chaque chaîne de réception est connectée en série une et une seule chaîne de conversion.

7. Station de base d'un réseau de télécommunication hertzien, **caractérisé en ce qu'**elle comporte un dispositif de réception selon l'une quelconque des revendications 1 à 6.

8. Station de base selon la revendication 7, **caractérisé en ce que** les moyens de calibration sont adaptés pour réaliser la sélection des fréquences d'échantillonnage et de transposition afin d'augmenter le ratio signal/bruit compte tenu des signaux d'harmoniques provenant des fréquences des canaux internes à la station de base ou utilisés par des stations de base adjacentes.

9. Procédé de calibration d'un dispositif de réception selon l'une quelconque des revendications 1 à 6, **caractérisé en ce qu'**il comporte les étapes de :

a) caractérisation spectrale (50) de chaque convertisseur analogique-numérique adaptée pour déterminer les harmoniques principales générées par des signaux ayant une fréquence dans la bande intermédiaire considérée,

b) détermination (52) des positions relatives dans la bande du système des signaux utiles et des signaux brouilleurs,

c) sélection (54) pour une première chaîne de conversion d'un couple fréquence intermédiaire-fréquence d'échantillonnage tel qu'au moins un signal utile a un ratio signal/bruit supérieur à la valeur prédéterminée en sortie de la chaîne de conversion,

d) si au moins un signal utile a un ratio signal/bruit inférieur à la valeur prédéterminée (56), réexécution de l'étape c) avec une autre chaîne de conversion et un autre couple fréquence intermédiaire-fréquence d'échantillonnage de sorte que ce signal utile ait un ratio signal/bruit supérieur à la valeur prédéterminée en sortie de cette chaîne.

10. Procédé selon la revendication 9, **caractérisé en ce que** les étapes c) et d) sont réitérées pour optimiser au moins un des critères suivants :

o minimiser le nombre de signaux utiles ayant un ratio signal/bruit supérieur à une valeur prédéterminée sur seulement une des chaînes de conversion ;

o minimiser le nombre de chaîne de conversion nécessaire pour traiter l'ensemble des signaux utiles ; et/ou

o maximiser le nombre de signaux utiles ayant un ratio signal/bruit supérieur à une valeur prédéterminée sur l'ensemble des chaînes de conversion.

**Patentansprüche**

1. Empfangsvorrichtung eines Multikanal-Breitband-Funkfrequenzsignals, umfassend eine analoge Eingangsetage (3) in Funkfrequenz, eine Konvertierungsetage in Zwischenfrequenz, die an die analoge Eingangsetage angeschlossen ist, und umfassend wenigstens zwei Konvertierungskanäle (13, 15), wobei jeder Konvertierungskanal ein Paar Zwischenfrequenz / Abtastfrequenz hat, das unterschiedlich von den anderen Konvertierungskanälen ist, und umfassend einen analogen / digitalen Konvertierer (29, 31) mit einer hohen Abtastfrequenz, sowie einen Frequenzmischer (17, 19), der das Signal in einer Zwischenfrequenz umsetzt und dabei am Eingang des entsprechenden analogen / digitalen Konvertierers (29, 31) angeschlossen ist, wobei die Vorrichtung darüber hinaus Kalibrierungsmittel umfasst, die geeignet sind, um einen oder mehrere parallel geschaltete Konvertierungskanäle auszuwählen, ggf. unter Berücksichtigung der Zwischenfrequenz und der Abtastfrequenz jedes Konvertierungskanals und des Geräuschs, das von den Abtast-Oberschwingungen des entsprechenden analogen / digitalen Konvertierers derart generiert wird, dass jeder der Kanäle des Funkfrequenzsignals ein Signal- / Geräuschverhältnis hat, das größer ist als vorbestimmter Wert am Ausgang wenigstens einer der ausgewählten Konvertierungskanäle.

2. Vorrichtung gemäß Anspruch 1, **dadurch gekennzeichnet, dass** die Abtastfrequenzen der analogen / digitalen Konvertierer identisch sind und die Zwischenfrequenzen für alle Konvertierungskanäle der Konvertierungsetage unterschiedlich sind.

3. Vorrichtung gemäß Anspruch 2, **dadurch gekennzeichnet, dass** die Beabstandung der Zwischenfrequenzen ein Vielfaches einer vorbestimmten Frequenz ist.

4. Vorrichtung gemäß Anspruch 3, **dadurch gekennzeichnet, dass** die vorbestimmte Frequenz gleich der Beabstandung zwischen Kanälen ist.

5. Vorrichtung gemäß irgendeinem der voranstehenden Ansprüche, **dadurch gekennzeichnet, dass** die Eingangsetage mehrere Empfangskanäle umfasst, umfassend jeweils eine Antenne und arbeitend im Antennen-Mehrfachempfang derart, dass an jeden Empfangskanal wenigstens ein Konvertierungskanal in Serie angeschlossen ist.

6. Vorrichtung gemäß Anspruch 5, **dadurch gekennzeichnet, dass** an jeden Empfangskanal ein und nur ein einziger Konvertierungskanal in Serie angeschlossen ist.

7. Basisstation eines hertzschen Telekommunikationsnetzes, **dadurch gekennzeichnet, dass** sie eine Empfangsvorrichtung gemäß irgendeinem der Ansprüche 1 bis 6 umfasst.

8. Basisstation gemäß Anspruch 7, **dadurch gekennzeichnet, dass** die Kalibrierungsmittel geeignet sind, um die Auswahl der Abtastfrequenzen und die Umsetzung zu realisieren, um das Verhältnis Signal / Geräusch in Anbetracht der Oberschwingungssignale zu erhöhen, die aus den internen Kanalfrequenzen der Basisstation stammen oder von den anliegenden Basisstationen verwendet werden.

9. Kalibrierungsverfahren einer Empfangsvorrichtung gemäß irgendeinem der Ansprüche 1 bis 6, **dadurch gekennzeichnet, dass** sie die Schritte umfasst:

a) Spektralcharakterisierung (50) jedes analogen numerischen Konvertierers, die geeignet ist, um die Haupt-Oberschwingungen zu bestimmen, die von Signalen generiert sind, die eine Frequenz im betrachteten Zwischenband haben,

b) Bestimmung (52) der relativen Positionen in dem Band des Systems der Nutzsignale und der Störsignale,

c) Auswahl (54) eines Paars Zwischenfrequenz / Abtastfrequenz für eine erste Konvertierungskette derart, dass wenigstens ein Nutzsignal ein Verhältnis Signal / Geräusch hat, das größer ist als der vorbestimmte Wert am Ausgang des Konvertierungskanals,

d) Wenn wenigstens ein Nutzsignal ein Verhältnis Signal / Geräusch hat, das geringer ist als der vorbestimmte Wert (56), erneute Ausführung des Schritts c) mit einem anderen Konvertierungskanal und einem anderen Paar Zwischenfrequenz / Abtastfrequenz derart, dass dieses Nutzsignal ein Verhältnis Signal / Geräusch hat, das größer ist als der vorbestimmte Wert am Ausgang dieses Kanals.

**10.** Verfahren gemäß Anspruch 9, **dadurch gekennzeichnet, dass** die Schritte c) und d) wiederholt werden, um wenigstens eines der folgenden Kriterien zu optimieren.

  ◦ Minimierung der Anzahl der Nutzsignale, die ein Verhältnis Signal / Geräusch haben, das größer ist als ein vorbestimmter Wert auf nur einem der Konvertierungskanäle;

  ◦ Minimierung der Anzahl der Konvertierungskanäle, die notwendig ist, um alle Nutzsignale zu bearbeiten; und / oder

  ◦ Maximierung der Anzahl der Nutzsignale, die ein Verhältnis Signal / Geräusch haben, das größer ist als ein vorbestimmter Wert auf allen Konvertierungskanäfen.

## Claims

**1.** Device for receiving a broadband multi-channel radiofrequency signal comprising a radiofrequency analogue input stage (3), an intermediate-frequency conversion stage (5) connected to the analogue input stage and comprising at least two conversion chains (13, 15), with each conversion chain having an intermediate frequency/sampling frequency pair that is different from the other conversion chains and comprising an analogue-digital converter (29, 31) with a high sampling frequency as well as a frequency mixer (17, 19) transposing the signal to an intermediate frequency by being connected to the input of the corresponding analogue-digital converter (29, 31), with the device further comprising means for calibration suited for selecting one or more conversion chains placed in parallel, where applicable, by considering the intermediate frequency and the sampling frequency of each conversion chain and the noise generated by the sampling overtones of the corresponding analogue-digital converter, in such a way that each one of the radiofrequency signal channels has a signal/noise ratio that is greater at output than a predetermined value of at least one of the selected conversion chains.

**2.** Device according to claim 1, **characterised in that** the sampling frequencies of the analogue-digital converters are identical and the intermediate frequencies are different for all of the conversion chains of the conversion stage.

**3.** Device according to claim 2, **characterised in that** the spacing of the intermediate frequencies is a multiple of a predetermined frequency.

**4.** Device according to claim 3, **characterised in that** the predetermined frequency is equal to the channel spacing.

**5.** Device as claimed in any preceding claim, **characterised in that** the input stage comprises several receiving chains each comprising an antenna and working in antenna diversity in such a way that at least one conversion chain is connected in series to each receiving chain.

**6.** Device according to claim 5, **characterised in that** one and only one conversion chain to each receiving chain is connected in series.

**7.** Base station of a wireless telecommunications network, **characterised in that** it comprises a device for receiving according to any of claims 1 to 6.

**8.** Base station according to claim 7, **characterised in that** the means of calibration are suited for carrying out the selection of the sampling and transposition frequencies and in order to increase the signal/noise ratio in light of the overtone signals coming from the frequencies of the channels internal to the base station or used by adjacent base stations.

**9.** Method for calibrating a device for receiving according to any of claims 1 to 6, **characterised in that** it comprises the steps of:

  a) spectral characterisation (50) of each analogue-digital converter suitable for determining the main overtones generated by signals that have a frequency in the intermediate bans under consideration,

  b) determination (52) of the relative positions in the band of the useful signals and of the interfering signals,

  c) selection (54) for a first conversion chain of an intermediate frequency/sampling frequency pair such that at least one useful signal has a signal/noise ratio greater at output than the predetermined value of the conversion chain, d) if at least one useful signal has a signal/noise ratio less than the predetermined value (56), re-execution of the step c) with another conversion chain and another intermediate frequency/sampling frequency pair in such a way that this useful signal has a signal/noise ratio that is greater at output than a predetermined value of this chain.

10. Method according to claim 9, **characterised in that** the steps c) and d) are reiterated in order to optimise at least one of the following criteria:

◦ minimising the number of useful signals that have a signal/noise ratio greater than a predetermined value on only one of the conversion chains;
◦ minimising the number of conversion chains required to process all of the useful signals; and/or
◦ maximising the number of useful signals that have a signal/noise ratio greater than a predetermined value over all of the conversion chains.

FIG.1.

FIG.2.

FIG.3A.

FIG.3B.

FIG.3C.

# FIG.4.

# FIG.5.

## RÉFÉRENCES CITÉES DANS LA DESCRIPTION

**Documents brevets cités dans la description**

- US 2005265483 A